# DEMANDE DE BREVET EUROPEEN

(11) **EP 0 810 120 A1**
(43) Date de publication de la demande: **03.12.1997**
(21) Numéro de dépôt: 97401108.2
(22) Date de dépôt: 20.05.1997
(51) Int. Cl.: B60R 13/02

(54) **Structure d'habillage pour une pièce d'équipement de véhicule automobile**

(30) Priorité: 29.05.1996 FR 9606613
(71) Demandeur: ECIA - EQUIPEMENTS ET COMPOSANTS POUR L'INDUSTRIE AUTOMOBILE, F-25400 Audincourt (FR)
(72) Inventeur: Saint-Dizier, Serge, 25700 Valentigney (FR)
(74) Mandataire: Habasque, Etienne Joel Jean-François

(57) **Abrégé**

Cette structure d'habillage pour une pièce d'équipement de véhicule automobile, du type comportant une couche de mousse de rembourrage (1) sur laquelle est disposée une peau de revêtement (2), et munie d'au moins un élément décoratif (4), est caractérisée en ce que l'élément décoratif (4) comporte des moyens d'accrochage en forme de harpon (5) adaptés pour passer à travers la peau de revêtement et s'engager dans la couche de mousse de rembourrage, pour assurer la fixation de cet élément sur la structure.

## Description

La présente invention concerne une structure d'habillage pour une pièce d'équipement de véhicule automobile.

On connaît déjà dans l'état de la technique, un certain nombre de structures d'habillage de ce type qui comportent une couche de mousse de rembourrage sur laquelle est disposée une peau de revêtement et qui sont munies d'au moins un élément décoratif.

Cette couche de rembourrage et cette peau peuvent être disposées sur une armature de support, ces différentes pièces étant réalisées en matière plastique.

L'élément décoratif peut par exemple être constitué par un jonc décoratif ou tout autre élément.

D'une manière générale, de tels éléments décoratifs sont fixés sur la peau par exemple par collage ou soudage.

On conçoit cependant que ce type de fixation présente un certain nombre d'inconvénients notamment au niveau de sa réalisation et de sa tenue dans le temps.

Le but de l'invention est donc de résoudre ces problèmes.

A cet effet, l'invention a pour objet une structure d'habillage pour une pièce d'équipement de véhicule automobile, du type comportant une couche de mousse de rembourrage sur laquelle est disposée une peau de revêtement, et munie d'au moins un élément décoratif, caractérisée en ce que l'élément décoratif comporte des moyens d'accrochage en forme de harpon adaptés pour passer à travers la peau de revêtement et s'engager dans la couche de mousse de rembourrage, pour assurer la fixation de cet élément sur la structure.

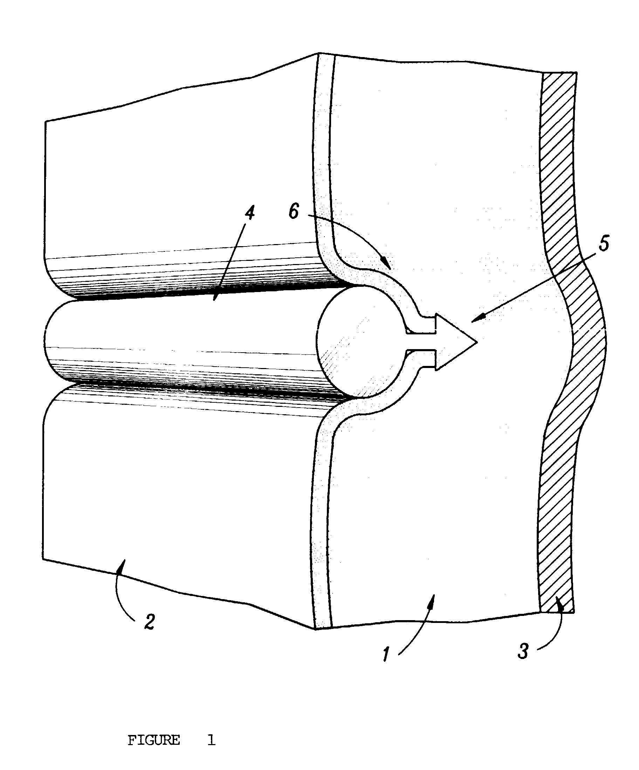

L'invention sera mieux comprise à l'aide de la description qui va suivre donnée uniquement à titre d'exemple et faite en se référant au dessin annexé qui représente une vue partielle en coupe et en perspective illustrant un exemple de réalisation d'une structure d'habillage selon l'invention.

On reconnaît en effet sur cette figure, une structure d'habillage pour une pièce d'équipement de véhicule automobile, qui comporte une couche de mousse de rembourrage, désignée par la référence générale 1, sur laquelle est disposée une peau de revêtement, désignée par la référence générale 2.

Cette peau et cette couche de mousse peuvent être disposées sur une armature de support désignée par la référence générale 3.

De plus, la peau de revêtement est munie d'au moins un élément décoratif désigné par la référence générale 4 sur cette figure et constitué par exemple par un jonc décoratif.

Selon l'invention, cet élément décoratif 4 comporte des moyens d'accrochage en forme de harpon tels que ceux désignés par la référence générale 5 sur cette figure, adaptés pour passer à travers la peau de revêtement 2 et pour s'engager dans la couche de mousse de rembourrage 1, pour assurer la fixation de cet élément décoratif sur la structure d'habillage.

Il va de soi bien entendu que différents modes de réalisation des moyens d'accrochage en forme de harpon de cet élément décoratif peuvent être envisagés. Dans l'exemple de réalisation décrit, celui-ci se présente sous la forme d'un jonc adapté pour être disposé dans une portion en creux, désignée par la référence générale 6 sur cette figure, de la structure d'habillage.

On notera à cet égard que l'épaisseur de paroi de la peau peut être progressivement décroissante en direction du fond de la partie en creux 6 de cette structure d'habillage, pour faciliter l'engagement des moyens d'accrochage en forme de harpon de l'élément décoratif dans la structure d'habillage.

On conçoit également que la présence de cette partie en creux de la structure permet d'assurer un bon positionnement de l'élément décoratif.

La structure d'habillage selon l'invention présente un certain nombre d'avantages par rapport aux structures de l'état de la technique, dans la mesure où la fixation des éléments décoratifs peut être assurée sans utiliser de colle, par exemple.

Par ailleurs, la fixation est également assurée de manière extrêmement fiable dans la mesure où par exemple les bords correspondants de la peau s'étendant de part et d'autre des moyens d'accrochage en forme de harpon de l'élément décoratif, et obtenus après passage de ceux-ci à travers cette peau, viennent en appui contre la face arrière de ces moyens d'accrochage afin de renforcer la fixation de l'élément décoratif sur la structure.

## Revendications

1. Structure d'habillage pour une pièce d'équipement de véhicule automobile, du type comportant une couche de mousse de rembourrage (1) sur laquelle est disposée une peau de revêtement (2), et munie d'au moins un élément décoratif (4), caractérisée en ce que l'élément décoratif (4) comporte des moyens d'accrochage en forme de harpon (5) adaptés pour passer à travers la peau de revêtement et s'engager dans la couche de mousse de rembourrage, pour assurer la fixation de cet élément sur la structure.

2. Structure d'habillage pour une pièce d'équipement de véhicule automobile selon la revendication 1, caractérisée en ce que l'élément décoratif (4) est disposé dans une partie en creux (6) de cette structure.

3. Structure d'habillage pour une pièce d'équipement de véhicule automobile selon la revendication 2, caractérisée en ce que l'épaisseur de paroi de la peau de revêtement (2) est progressivement décroissante en direction du fond de la partie en creux (6).
